(19)

Europäisches Patentamt

European Patent Office

Office européen des brevets

(11) **EP 2 437 499 A1**

(12) **EUROPEAN PATENT APPLICATION**
published in accordance with Art. 153(4) EPC

(43) Date of publication:
**04.04.2012 Bulletin 2012/14**

(21) Application number: **10780283.7**

(22) Date of filing: **27.05.2010**

(51) Int Cl.:
*H04N 7/32* (2006.01)   *H04N 7/30* (2006.01)

(86) International application number:
**PCT/JP2010/003552**

(87) International publication number:
**WO 2010/137323 (02.12.2010 Gazette 2010/48)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **29.05.2009   JP 2009130459**

(71) Applicant: **Mitsubishi Electric Corporation Tokyo 100-8310 (JP)**

(72) Inventors:
• **SUGIMOTO, Kazuo**
**Tokyo 100-8310 (JP)**

• **SEKIGUCHI, Shunichi**
**Tokyo 100-8310 (JP)**
• **ITANI, Yusuke**
**Tokyo 100-8310 (JP)**
• **MINEZAWA, Akira**
**Tokyo 100-8310 (JP)**
• **YAMAGISHI, Shuichi**
**Tokyo 100-8310 (JP)**

(74) Representative: **Pfenning, Meinig & Partner GbR
Patent- und Rechtsanwälte
Theresienhöhe 13
80339 München (DE)**

(54) **VIDEO ENCODER, VIDEO DECODER, VIDEO ENCODING METHOD, AND VIDEO DECODING METHOD**

(57)   A compressing unit 6 of a video encoding device selects whether or not to transform and quantize a prediction error signal 5 after a downsampling processing unit 36 performs a reduction transformation on the prediction error signal 5 by using a transforming process determining unit 31, and then creates quantization coefficient data 7a or 7b. When the compressing unit creates the quantization coefficient data 7b, a local decoding unit located behind the compressing unit inverse-quantizes and inverse-transforms the quantization coefficient data 7b, and, after that, an upsampling processing unit performs an enlargement transformation on the quantization coefficient data to create a decoded prediction error signal.

FIG.8

EP 2 437 499 A1

**Description**

Field of the Invention

The present invention relates to a video encoding device, a video decoding device, a video encoding method, and a video decoding method which are used for a video compression encoding technique, a compressed video data transmission technique, etc.

Background of the Invention

Conventionally, in international standard video encoding methods, such as MPEG and ITU-T H. 26x, each input video frame is subjected to a compression process with the video frame being divided into macro blocks each of which consists of 16x16 pixel blocks.

On the other hand, in recent years, a technique of compression-encoding a high-definition high-quality video having a video format, such as a 4K×2K-pixel video format having an image resolution which is four times as high as that of HDTV (High Definition TeleVision, 1920x1080 pixels), an 8K×4K-pixel video format having an image resolution which is further increased to four times as high as that of the 4K×2K-pixel video format, or a 4:4:4 video signal format of increasing the number of sampled chrominance signals, thereby improving the color reproduction nature, has been desired. When compression-encoding such a high-definition high-quality video, it is impossible to perform an encoding process by using an image signal correlation in a 16x16 pixel macro block to a sufficient degree, and it is therefore difficult to provide a high compression ratio. In order to deal with this problem, for example, a technique of extending the size of each conventional 16×16 pixel macro block to a 32x32 pixel block, as disclosed in nonpatent reference 1, and increasing the unit to which a motion vector is allocated, thereby reducing the amount of encoded parameters required for prediction, or a technique of increasing the block size for the transform coding of a prediction error signal, thereby removing a correlation between pixels of the prediction error signal effectively, have been proposed.

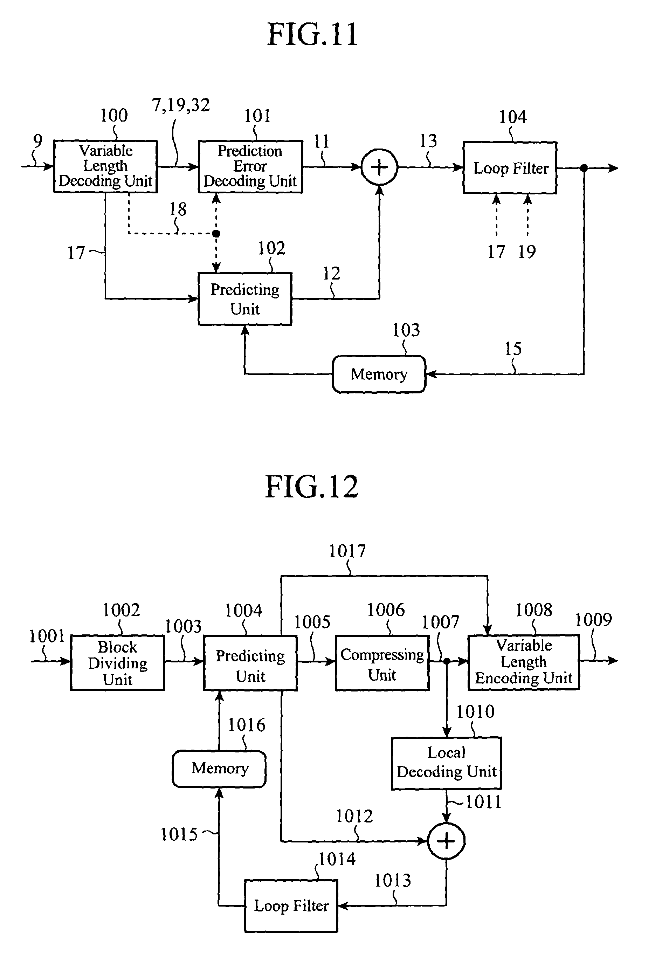

Fig. 12 is a block diagram showing the structure of an encoding device disclosed in nonpatent reference 1. In encoding disclosed in nonpatent reference 1, a block dividing unit 1002 divides an inputted video signal 1001 which is a target to be encoded into macro blocks (rectangular blocks of a luminance signal each having 32 pixels × 32 lines), and is inputted to a predicting unit 1004 as an encoded video signal 1003.

The predicting unit 1004 predicts an image signal of each color component in each macro block within each frame and between frames to derive a prediction error signal 1005. Especially, when performing a motion-compensated prediction between frames, the predicting unit searches for a motion vector for each macro block itself or each of subblocks into which each macro block is further divided, creates a motion-compensated prediction image according to the motion vector, and derives a prediction error signal 1005 by calculating the difference between the motion-compensated prediction image and the encoded video signal 1003. In nonpatent reference 3, a method of diversifying the divided shapes of a motion prediction region with the size of each macro block being fixed to 16x16 pixels has been proposed for conventional macro blocks.

After performing a DCT (discrete cosine transform) process on the prediction error signal 1005 to remove a signal correlation from the prediction error signal 1005 while changing the block size according to the size of a unit area to which the motion vector is allocated, a compressing unit 1006 quantizes the prediction error signal to derive compressed data 1007. While the compressed data 1007 is entropy-encoded and outputted as a bit stream 1009 by a variable length encoding unit 1008, the compressed data is also sent to a local decoding unit 1010 and a decoded prediction error signal 1011 is derived by this local decoding unit.

This decoded prediction error signal 1011 is added to a prediction signal 1012 which is used to create the prediction error signal 1005 to create a decoded signal 1013, and this decoded signal is inputted to a loop filter 1014. The decoded signal 1013 is stored in a memory 1016 as a reference image signal 1015 for creating a subsequent prediction signal 1012 after the decoded signal is subjected to a process of removing block noise by the loop filter 1014. A parameter 1017 used for the creation of the prediction signal, which is determined by the predicting unit 1004 in order to derive the prediction signal 1012, is sent to the variable length encoding unit 1008, and is multiplexed into a bit stream 1009 and this bit stream is outputted. Information, such as intra prediction mode information indicating how to perform a spatial prediction within each frame, and a motion vector indicating an amount of inter-frame movement, is included in the parameter 1017 used for the creation of the prediction signal, for example.

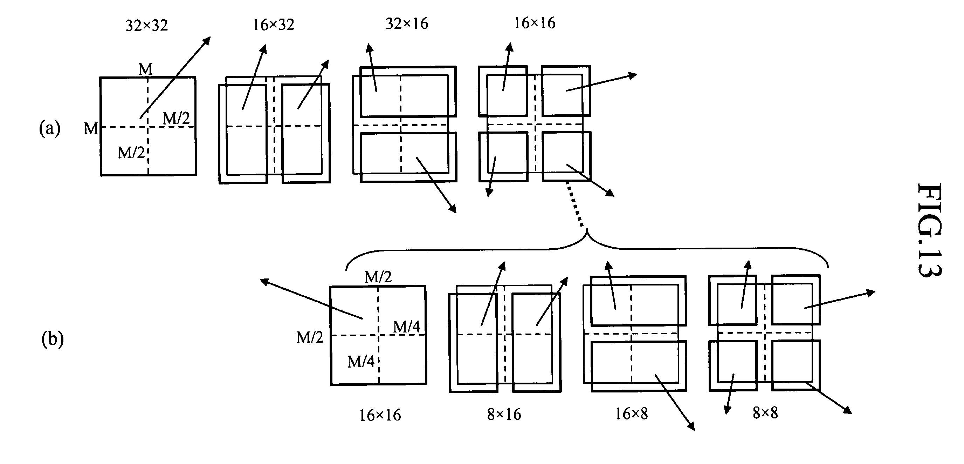

While a conventional international standard video coding method, such as MPEG or ITU-T H.26x, uses 16×16 pixels as the macro block size, the encoding device disclosed in nonpatent reference 1 uses 32x32 pixels as the macro block size (super macro block: SMB). Fig. 13 shows the shapes of divided regions to each of which a motion vector is allocated at the time of performing a motion-compensated prediction for each M×M pixel macro block, and Fig. 13 (a) shows each SMB disclosed in nonpatent reference 1 and Fig. 13 (b) shows each macro block based on conventional MPEG-4 AVC/H.264 (refer to nonpatent reference 2). While each SMB has a large area for each motion prediction region which is covered by a single motion vector with the number of pixels M=32, each conventional macro block uses the number of pixels M/2=16. As a result, because in the case of SMBs the amount of information of the motion vector which is needed for the entire picture decreases compared with the case of conventional macro blocks having the number of pixels M/2=16, the amount of motion vector code which should be transmitted as a bit stream can be reduced.

Furthermore, the encoding device disclosed in nonpatent reference 1 is constructed in such a way that when the size of each divided shape is larger than (M/2) × (M/2), the DCT block size is set to 16×16 pixels, and a correlation between images in a wide region is removed at a time. As a result, the compression efficiency of a prediction error signal is improved.

Related art document

Nonpatent reference

Nonpatent reference 1: Siwei Ma and C.-C. Jay Kuo, "High-definition Video Coding with Super-macroblocks", Proc. SPIE, Vol. 6508, 650816 (2007)
Nonpatent reference 2: MPEG-4 AVC (ISO/IEC 14496-10)/H.ITU-T 264 standards
Nonpatent reference 3: S.Kondo and H.Sasai, "A Motion Compensation Technique using Sliced Blocks and its Application to Hybrid Video Coding", VCIP 2005, July 2005

Summary of the Invention

As mentioned above, in the conventional system disclosed in nonpatent reference 1, the size of each macro block is enlarged to increase the unit to which a motion vector is allocated and reduce the code amount of the parameters required for prediction, and a correlation between pixels of the signal is removed to improve the compression efficiency of the prediction error signal. On the other hand, a problem with the conventional system is that because an application of a large DCT block size is accompanied by an increase in the effective number of digits required to express the transform coefficients, the number of bits required to express the coefficients is increased as a result.

The present invention is made in order to solve the above-mentioned problems, and it is therefore an object of the present invention to provide a video encoding device which implements a video encoding method having good implementation load balance, of removing a signal correlation more effectively according to the statistical and local properties of a video signal which is a target to be encoded and performing efficient information compression, thereby improving the optimality for encoding of an ultra-high-definition video signal, and a method of implementing the video encoding device, and a video decoding device and a method of implementing the video decoding device.

In accordance with the present invention, there is provided a video encoding device including: a block dividing unit for dividing each frame of a moving image signal inputted thereto into macro blocks each having a predetermined size to output each of the macro blocks as a macro block image; a frame memory for storing a reference image; an inter frame prediction unit for performing an inter frame prediction on a basis of both the reference image stored in the frame memory and the macro block image to create a prediction image, and for outputting information specifying a method used for the above-mentioned inter frame prediction as inter frame prediction information; a predicting unit for subtracting the prediction image from the macro block image to create a prediction error signal; a downsampling processing unit for downsampling the prediction error signal to create a downscaled prediction error signal; a first quantization and transformation unit for transforming and quantizing the downscaled prediction error signal to create quantized and transformed coefficients; a first inverse quantization and transformation unit for inverse-quantizing and inverse-transforming the quantized and transformed coefficients to create a decoded downscaled prediction error signal; an upsampling processing unit for upsampling the decoded downscaled prediction error signal to create a decoded prediction error signal; an adder unit for adding the decoded prediction error signal and the prediction image to create a local decoded image, and outputting the above-mentioned local decoded image to the frame memory as the reference image; and an entropy encoding unit for entropy-encoding the quantized and transformed coefficients and the inter frame prediction information to output encoded data.

In accordance with the present invention, there is provided a video decoding device including: an entropy decoding unit for entropy-decoding encoded data inputted thereto, and for outputting inter frame prediction information and quantized and transformed coefficients which are included in the above-mentioned encoded data; a frame memory for storing a reference image; a first inverse quantization and transformation unit for inverse-quantizing and inverse-transforming the quantized and transformed coefficients to create a decoded downscaled prediction error signal; an upsampling processing unit for upsampling the decoded downscaled prediction error signal to create a decoded prediction error signal; a predicting unit for creating a prediction image from the reference image stored in the frame memory

3

according to the inter frame prediction information; and an adder unit for adding the decoded prediction error signal and the prediction image to create a decoded image, and for outputting the above-mentioned decoded image to the frame memory as the reference image.

In accordance with the present invention, there is provided a video encoding method including: a block division step of dividing each frame of a moving image signal inputted thereto into macro blocks each having a predetermined size to output each of the macro blocks as a macro block image; an inter frame prediction step of performing an inter frame prediction on a basis of both a reference image stored in a frame memory and the macro block image to create a prediction image, and for outputting information specifying a method used for the above-mentioned inter frame prediction as inter frame prediction information; a predicting step of subtracting the prediction image from the macro block image to create a prediction error signal; a downsampling process step of downsampling the prediction error signal to create a downscaled prediction error signal; a first quantization and transformation step of transforming and quantizing the downscaled prediction error signal to create quantized and transformed coefficients; a first inverse quantization and transformation step of inverse-quantizing and inverse-transforming the quantized and transformed coefficients to create a decoded downscaled prediction error signal; an upsampling process step of upsampling the decoded downscaled prediction error signal to create a decoded prediction error signal; an adding step of adding the decoded prediction error signal and the prediction image to create a local decoded image, and outputting the above-mentioned local decoded image to the frame memory as the reference image; and an entropy encoding step of entropy-encoding the quantized and transformed coefficients and the inter frame prediction information to output encoded data.

In accordance with the present invention, there is provided a video decoding device including: an entropy decoding step of entropy-decoding encoded data inputted thereto, and outputting inter frame prediction information and quantized and transformed coefficients which are included in the above-mentioned encoded data; a first inverse quantization and transformation step of inverse-quantizing and inverse-transforming the quantized and transformed coefficients to create a decoded downscaled prediction error signal; an upsampling processing step of upsampling the decoded downscaled prediction error signal to create a decoded prediction error signal; a predicting unit of creating a prediction image from a reference image stored in a frame memory according to the inter frame prediction information; and an adding step of adding the decoded prediction error signal and the prediction image to create a decoded image, and outputting the above-mentioned decoded image to the frame memory as the reference image.

According to the present invention, the prediction error signal is downsampled, and is then transformed and quantized to create the quantized and transformed coefficients while the quantized and transformed coefficients are upsampled, and are then inverse-quantized and inverse-transformed to create the decoded prediction error signal. Therefore, the video encoding method can be implemented to have good implementation load balance, and remove a signal correlation more effectively according to the statistical and local properties of a video signal which is a target to be encoded and perform efficient information compression. As a result, the video encoding device, the video encoding method, the video decoding device, and the video decoding method can improve their optimality for the encoding of an ultra-high-definition video signal having the 4:4:4 format at a low cost.

Brief Description of the Figures

[Fig. 1] Fig. 1 is a view showing the 4:4:4 format which is a target to be processed by a video encoding device and a video decoding device in accordance with Embodiment 1;
[Fig. 2] Fig. 2 is a block diagram showing the structure of the video encoding device in accordance with Embodiment 1;
[Fig. 3] Fig. 3 is an explanatory drawing showing a reference block which a block dividing unit shown in Fig. 2 creates;
[Fig. 4] Fig. 4 is an explanatory drawing showing examples of shapes into which a predicting unit shown in Fig. 2 divides a set of motion prediction unit blocks, each of the shapes consisting of one or more basic blocks;
[Fig. 5] Fig. 5 is a flow chart showing the operation of the predicting unit shown in Fig. 2;
[Fig. 6] Fig. 6 is a view for explaining a method of calculating a cost J which is executed by the predicting unit;
[Fig. 7] Fig. 7 is a view showing an example of determination of an estimated vector PMV in each of motion prediction modes mc_mode1 to mc_mode4 which is carried out by the predicting unit;
[Fig. 8] Fig. 8 is a block diagram showing the internal structure of a compressing unit shown in Fig. 2;
[Fig. 9] Fig. 9 is a block diagram showing the internal structure of a local decoding unit shown in Fig. 2;
[Fig. 10] Fig. 10 is an explanatory drawing showing the data arrangement of a bit stream;
[Fig. 11] Fig. 11 is a block diagram showing the structure of the video decoding device in accordance with Embodiment 1;
[Fig. 12] Fig. 12 is a block diagram showing the structure of an encoding device disclosed in nonpatent reference 1; and
[Fig. 13] Fig. 13 is a view showing the appearance of divided shapes of a motion vector allocation region at the time of performing a motion-compensated prediction for each macro block in the encoding device disclosed in nonpatent reference 1.

Embodiments of the Invention

Embodiment 1.

Hereafter, the preferred embodiments of the present invention will be explained in detail with reference to the drawings.
In this embodiment, a video encoding device which performs compression of a digital video signal having a 4:4:4 format inputted thereto and which is adapted for the state of a signal of each color component to perform a motion compensation prediction process, and a video decoding device which performs decompression of a digital video signal having a 4:4: 4 format and which is adapted for the state of a signal of each color component to perform a motion compensation prediction process will be described.

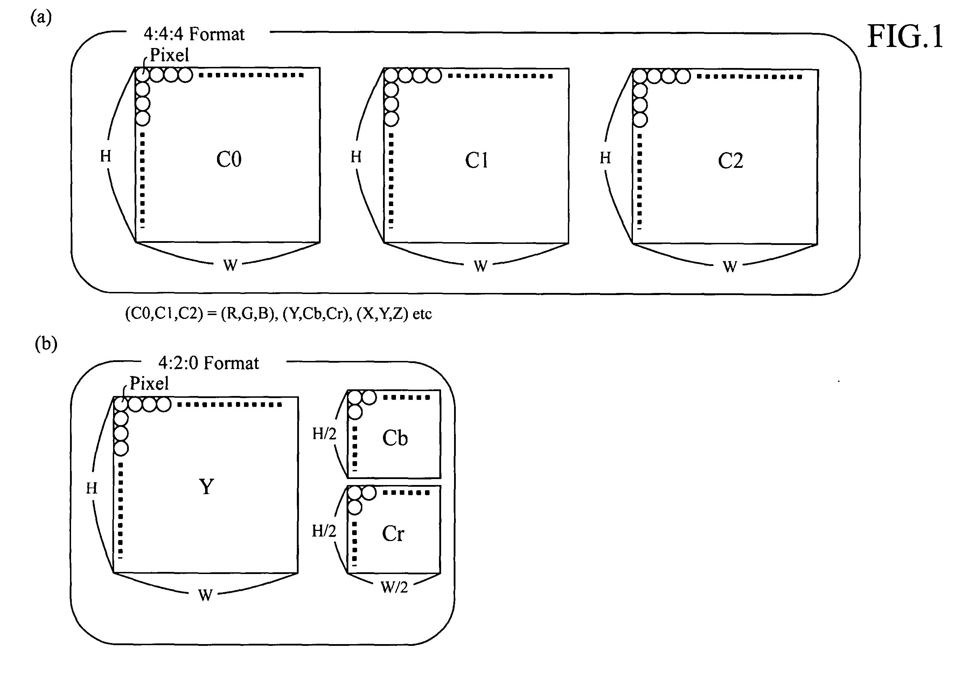

Fig. 1 shows the 4:4:4 format which the video encoding device and the video decoding device in accordance with Embodiment 1 use as the format of an input. The 4:4:4 format denotes a format in which, as shown in Fig. 1(a), the number of pixels of three signal components C0, C1, and C2 which construct a color moving image are the same as one another. The color space of the three signal components can be RGB or XYZ, or can be luminance and color difference (YUV, YCbCr, or YPbPr). In contrast with the 4:4:4 format, a 4:2:0 format as shown in Fig. 1(b) denotes a format in which the color space is YUV, YCbCr, or YPbPr, and each of color difference signal elements (e.g. Cb and Cr in the case of YCbCr) has pixels in each of a horizontal direction W and a vertical direction H whose number of pixels is half that of the luminance Y in each of the horizontal direction and the vertical direction.
The video encoding device and the video decoding device will be explained hereafter by especially limiting to an example of using a method of performing processes by assuming that the color space of the 4:4:4 format is YUV, YCbCr, or YPbPr, and each color component is equivalent to a luminance component. However, it is needless to say that operations which will be explained hereafter can be applied directly to the luminance signal even when the video encoding device and the video decoding device deal with a video signal having the 4:2:0 format. Furthermore, the operations can be applied to color difference signals having the 4:2:0 format by reducing the size of each of the color difference signals to half.

1. Video encoding device

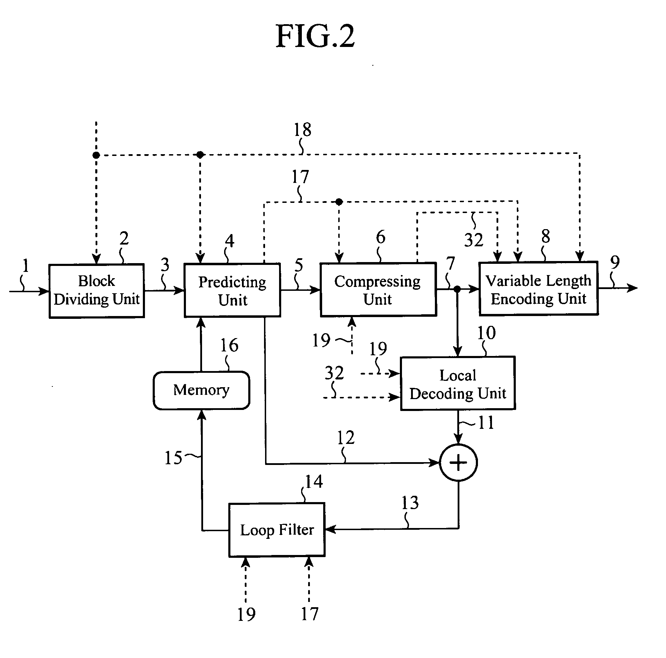

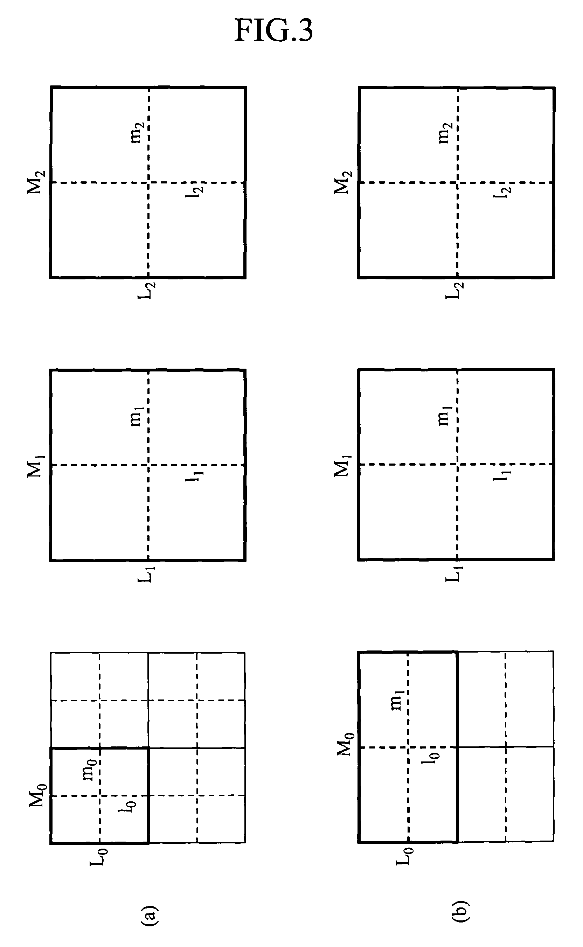

Fig. 2 is a block diagram showing the structure of the video encoding device in accordance with Embodiment 1. The video encoding device shown in Fig. 2 is constructed in such a way as to divide each inputted video frame having the 4:4:4 format into blocks each having $M_{max} \times M_{max}$ pixels (each block is referred to a "reference block" from here on), and perform a motion prediction on each of the reference blocks to compression-encode a prediction error signal.
First, an inputted video signal (moving image signal) 1 which is the target to be encoded is divided into reference blocks (rectangular blocks each having M pixels $\times$ M lines) by a block dividing unit 2, and these blocks are inputted to a predicting unit 4 as an encoded signal (macro block image) 3. Each reference block created by the block dividing unit 2 is shown in Fig. 3. As shown in Fig. 3, each reference block is constructed as reference block data which is a unit in which rectangular blocks consisting of $M_{max} \times M_{max}$ pixels are collected. Although mentioned later in detail, the reference block size $M_{max}$ is determined and encoded at an upper layer data level, such as a frame, a sequence, or a GOP (Group Of Pictures). The reference block size $M_{max}$ can be changed within each frame. In this case, the reference block size $M_{max}$ is specified for each slice or the like in which a plurality of macro blocks are collected.
Each reference block data is further divided into one or more "motion prediction unit blocks" which are $L_i \times M_i$ pixel blocks (i: color component identifier), and the motion prediction and the encoding are performed by defining each motion prediction unit block as a base. A pattern of motion prediction unit blocks shown in Fig. 3 (a) has $L_0=M_{max}/2$ and $M_0=M_{max}/2$, and a pattern of motion prediction unit blocks shown in Fig. 3(b) has $L_0=M_{max}/2$ and $M_0=M_{max}$. In both of Figs. 3(a) and 3(b), $L_1=M_1=L_2=M_2=M_{max}$. In the following explanation, it is assumed that the reference blocks of each color component having the 4:4:4 format are the same in size among the three color components C0, C1, and C2, and, when the reference block size is changed, the reference block size is changed to an identical size for all the three color components. In addition, each of the sizes $L_i$ and $M_i$ of motion prediction unit blocks can be selectably determined for each of the color components C0, C1, and C2, and can be changed in units of a sequence, a GOP, a frame, a reference block, or the like. Using this structure, the motion prediction unit block sizes can be determined with flexibility according to a difference in the properties of the signal of each color component without having to change the reference block size. Furthermore, because the reference block size is not changed dynamically, efficient implementation in consideration of parallelization and pipelining of the encoding and decoding processing carried out in units of a reference block can be established.
The predicting unit (inter frame prediction unit) 4 carries out a motion-compensated prediction of the image signal of each color component in each reference block to create a prediction signal (prediction image) 12, and also subtracts a reference image signal stored in a memory (frame memory) 16 from the encoded signal 3 to derive a prediction error signal 5. The operation of this predicting unit 4 will be explained later in detail. After performing a transforming process, such as a DCT process, on the prediction error signal 5 to remove a signal correlation from this prediction error signal, a compressing unit 6 quantizes the prediction error signal to derive prediction error compressed data 7. At this time, the compressing unit 6 has a plurality of modes for a transforming process which can be adapted to the prediction error signal 5, and selects an optimal mode from among these modes to carry out an encoding process and informs the selected mode to a variable length encoding unit 8 as transforming process mode information 32. Because the operation of the compressing unit 6 is a feature of the video encoding device in accordance with this Embodiment 1, the operation of the compressing unit will be mentioned later in detail.

The variable length encoding unit (entropy encoding unit) 8 entropy-encodes the prediction error compressed data 7, and outputs this entropy-encoded prediction error compressed data as a bit stream 9.

The local decoding unit 10 derives a decoded prediction error signal 11 from the prediction error compressed data 7. This decoded prediction error signal 11 is added to a prediction signal 12 which is used for the creation of the prediction error signal 5 by an adder unit, so that a decoded signal (local decoded image) 13 is created and is inputted to a loop filter 14. Parameters 17 for prediction signal creation (inter frame prediction information), which are determined by the predicting unit 4 in order to derive the prediction signal 12, are sent to the variable length encoding unit 8, and are outputted as the bit stream 9. The parameters 17 for prediction signal creation are sent to the variable length encoding unit 8, and are outputted as the bit stream 9. The descriptions of the parameters 17 for prediction signal creation will be explained in greater detail hereinafter together with an explanation of the predicting unit 4.

The loop filter 14 performs block noise alleviating process on the decoded signal 13 onto which block occurred as a result of transform coefficient quantization of the compressing unit 6 by using both the parameters 17 for prediction signal creation and quantization parameters 19.

In the video encoding methods disclosed in nonpatent references 1 to 3, when each reference block is defined as a macro block, a method of encoding each frame while selecting intra-frame coding or inter-frame predictive coding for each macro block is typically used. This is because when the inter-frame motion prediction is not sufficient, the use of a correlation between frames can further improve the efficiency of the encoding. Hereinafter, in the video encoding device in accordance with this Embodiment 1, although any description about the intra-frame coding and the selectively use of the intra-frame coding is not explicitly stated in this specification when explaining the point of the present invention, the video encoding device can be constructed in such a way as to be able to selectively use the intra-frame coding for each reference block, except where specifically noted. In the video encoding device in accordance with this Embodiment 1, although each reference block can be defined as a macro block, the term reference block will be used hereafter for explanation of a motion prediction.

Hereafter, the operation of the predicting unit 4 which is a feature of this Embodiment 1 will be explained in detail. The predicting unit 4 in accordance with this Embodiment 1 has the following two features.

(1) Adaptation of the reference block size and the motion prediction unit block size in connection with adaptation of the shape of each divided region used for motion prediction
(2) Determination of a motion prediction mode and a motion vector according to the properties of each color component

As to above-mentioned (1), the predicting unit 4 divides each reference block into one or more motion prediction unit blocks each having $L_i \times M_i$ pixels according to the properties of the signal of each color component, and further divides each motion prediction unit block into a plurality of shapes each of which consists of a combination of one or more blocks each having $l_i \times m_i$ pixels. The predicting unit 4 then performs a prediction by allocating a specific motion vector to each divided region, selects the plurality of shapes which provide the most predictive efficiency as the motion prediction mode, and then performs a motion prediction on each divided region by using the motion vector derived as a result of the selection to derive a prediction error signal 5.

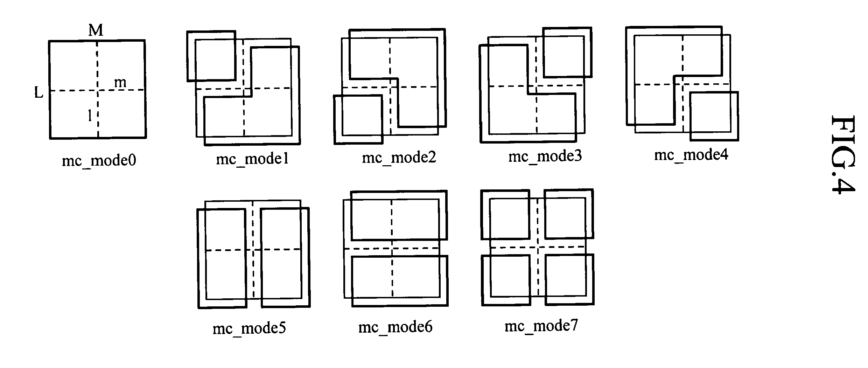

Each of the divided shapes in each motion prediction unit block can be constructed of a combination of one or more "basic blocks" each of which consists of $l \times m$ pixels. In the video encoding device in accordance with this Embodiment 1, the following constraints: "m=M/2" and "l=L/2 " are provided between M and m and between L and l, respectively. The divided shapes each consisting of one or more basic blocks which are determined according to these requirements are shown in Fig. 4. Fig. 4 is an explanatory drawing showing examples of the shapes in which the predicting unit 4 divides each motion prediction unit block into units each of which consists of one or more basic blocks. Hereafter, in the video encoding device in accordance with this Embodiment 1, it is assumed that the patterns (division patterns) of divided shapes shown in Fig. 4 can be common among the three color components, or can be determined independently for each of the three color components. Hereafter, these division patterns mc_mode0 to mc_mode7 are referred to as "motion prediction modes".

In the video encoding methods disclosed in nonpatent references 1 and 2, the shape of each motion prediction application region is limited to a rectangle, and such a diagonal division as shown in Fig. 4 of each reference block into regions including a region other than a rectangular region cannot be used. In contrast with this, in accordance with this Embodiment 1, because the shape of each divided region, as shown in Fig. 4, to which a motion prediction is applied is diversified, when a complicated movement, such as the outline of a moving object, is included in a reference block, a motion prediction can be carried out with a smaller number of motion vectors than that used in the case of a rectangular division. Nonpatent reference 3 discloses a method of diversifying the shapes of regions into which a conventional macro block is divided, and to each of which a motion prediction is applied. In this nonpatent reference 3, the divided shapes are expressed by intersection positions each between a line segment used for the macro block division, and a block border. However, because this method increases the number of division patterns in each reference block while fixing the pixel number M, the following problems arise.

Problem 1:

The code amount to represent the division patterns of each reference block increases. When an arbitrary $m_i$ meeting $M_{max}$ mod m=0 is permitted, the number of division patterns in each reference block increases and it becomes necessary to encode information for specifying each of the division patterns as overhead information. Because the probability that each certain specific division pattern occurs disperses as the number of division patterns increases, the entropy encoding of the division patterns becomes inefficient and becomes an overhead as a code amount, and the total encoding performance reaches its limit.

Problem 2:

As the number of division patterns increases, the amount of arithmetic operation required to select a division optimal at the time of the encoding increases. Because the motion prediction is a heavy load process which occupies a large percentage of the encoding processing load, the conventional video encoding device has no other choice but to be designed in such a way as to verify and use only a specific division pattern among the plurality of division patterns if the conventional video encoding device uses an algorithm which increases the number of division patterns blindly. Therefore, there is a case in which the conventional video encoding device cannot make full use of the original ability which the algorithm has.

In contrast with this, the approach shown in Fig. 4 of the video encoding device in accordance with this Embodiment 1 solves the above-mentioned problems by using the following three methods: the first method (1) of enabling a change of the value of $M_{max}$ at an upper level, such as a frame, according to the requirements on the encoding, and the resolution and properties of the video signal; the second method (2) of enabling a division of each $M_{max} \times M_{max}$ pixel block into one or more $L_i \times M_i$ pixel basic blocks according to the characteristics of each color component $C_i$; and the third method (3) of securing variations of division while limiting the requirements on the division into basic blocks to a division having divided shapes which satisfy the following constraints: "m=M/2" and "l=L/2". The value of the size $M_{max}$ of the basic blocks is not changed locally within each frame or each slice, and can be changed only at a higher order data structure level, such as a frame level or a frame sequence (a sequence or a GOP). This mechanism enables adaptation to a difference in the meaning of the image signal pattern included in each reference block. For example, in a video having a small resolution (Video Graphics Array: VGA, or the like) and a video having a large resolution (HDTV or the like), their signal patterns in each $M_{max} \times M_{max}$ pixel block having the same size express different meanings. When predicting an identical object to be shot, while a signal pattern close to the structure of the object to be shot is captured in a video having a small resolution, a signal pattern of a further local portion of the object to be shot is simply captured in a video having a large resolution even if the same block size as that in the case of the video having a small resolution is used. Therefore, when the reference block size does not change depending on the resolution, the signal pattern within each reference block has a larger noise component as the resolution increases, and therefore it becomes impossible to improve the ability of motion prediction as a pattern matching technology.

Therefore, by enabling a change of the value of the reference block size $M_{max}$ only at a high order data structure level, while the code amount required for the signaling of the value of the reference block size $M_{max}$ can be reduced, the signal pattern included in each reference block can be optimized according to the conditions, such as the resolution and scene changes of the video, and activity changes of the entire screen from the viewpoint of the motion prediction. In addition to this mechanism, by enabling a change of the division pattern within each motion prediction unit block for each color component, as shown in Fig. 3, the unit to be processed for the motion prediction can be optimized according to the signal characteristics of each color component. In addition, by providing restricted flexibility of the division patterns to each motion prediction unit block, as shown in Fig. 4, while the code amount required to express the division patterns within each motion prediction unit block is reduced, the whole efficiency of the motion prediction can be improved. Furthermore, by carrying out the process of determining the value of the reference block size $M_{max}$ at a frame level with efficiency, the variations of division pattern which should be checked within each reference block after that can be reduced compared with the conventional technologies, and the load on the encoding process can be reduced.

As the method of determining the value of the reference block size $M_{max}$, for example, there are methods as follows.

The first method (1) of determining the value of the reference block size $M_{max}$ according to the resolution of the video to be encoded. In the case of the same $M_{max}$ value, a video having a large resolution represents that an image signal pattern in each reference block has a more significant noise component, and it becomes difficult for a motion vector to capture the image signal pattern. In such a case, the $M_{max}$ value is increased to enable a motion vector to capture the image signal pattern.

The second method (2) of assuming that whether or not the difference between frames is large is an activity, and, when the activity is large, performing the motion prediction with a small $M_{max}$ value, whereas when the activity is small, performing the motion prediction with a large $M_{max}$ value. Furthermore, the size control at this time is determined according to the frame rate of the video to be encoded. Because as the frame rate increases, an inter frame correlation becomes large, the dynamic range of the motion vector itself becomes small and hence the code amount becomes small, a method of setting the $M_{max}$ value to a large value in such a way that this value does not become excessive even if the activity is somewhat small to make it possible to predict up to a fine movement can be considered, for example.

The third method (3) of combining the methods (1) and (2) by weighting these methods to determine the value of the reference block size $M_{max}$.

After the value of the reference block size $M_{max}$ is determined, the sizes $L_i$ and $M_i$ of each motion prediction unit block for each color component is determined. For example, in the case in with which the inputted video signal 1 is defined in the color space of YUV (or YCbCr or the like), the U/V component which is a chrominance signal has a narrow signal band compared with the Y component of the luminance signal. Therefore, a variance within the blocks becomes small compared with that of the luminance. An example of a determination criterion by which to determine the sizes $L_i$ and $M_i$ of the U/V component in such a way that they are larger than the sizes $L_i$ and $M_i$ of the Y component of the luminance signal on the basis of the fact that a variance within the blocks becomes small compared with that of the luminance can be considered (refer to Fig. 3).

The values of the block sizes $M_{max}$, $L_i$, and $M_i$ derived as the result of having performing these determinations are notified to the block dividing unit 2, the predicting unit 4, and the variable length encoding unit 8 as reference block size information 18. By simply setting $L_i$ and $M_i$ as derivable values with respect to $M_{max}$ through simple arithmetic operations, as shown in Fig. 3, what is necessary is just to encode the identifiers of computation expressions instead of encoding $L_i$ and $M_i$ as independent values. Therefore, the code amount required for the reference block size information 18 can be reduced.

Although not illustrated particularly in Fig. 2, the video encoding device can be constructed in such a way as to include a reference block size determining unit for determining the values of $M_{max}$, $L_i$, and $M_i$, and notifying these values to each unit, and determine the reference block size information 18.

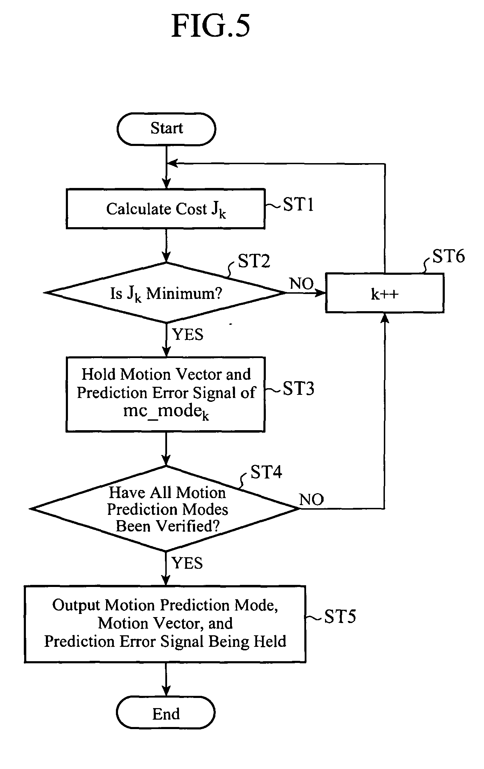

The predicting unit 4 performs a motion detection process using the division patterns shown in Figs. 3 and 4 according to the motion prediction unit block sizes $L_i$ and $M_i$ which are derived from the reference block size information 18. Fig. 5 is a flow chart showing the operation of the predicting unit 4. The predicting unit 4 carries out a motion prediction of the $C_i$ component of the frame in units of a motion prediction unit block having $L_i \times M_i$ pixels. Fundamentally, in this process, the predicting unit detects an optimum motion vector in each divided region within a specified movement search range for each of the division patterns mc_mode0 to mc_mode7 shown in Fig. 4, and finally determines which one of the division patterns mc_mode0 to mc_mode7 should be used for the motion prediction unit block in question to provide the highest predictive efficiency.

The predictive efficiency is defined by the following cost J which is derived from both the total code amount R of motion vectors within the motion prediction unit block, and the amount D of prediction error between the prediction signal 12, which is created from the reference image stored in the memory 16 by an application of the above-mentioned motion vectors, and the inputted video signal 1. The predicting unit 4 is constructed in such a way as to output the motion prediction mode and the motion vector which minimize this cost J.

$$J=D+\lambda R \qquad (\lambda: \text{constant}) \quad (1)$$

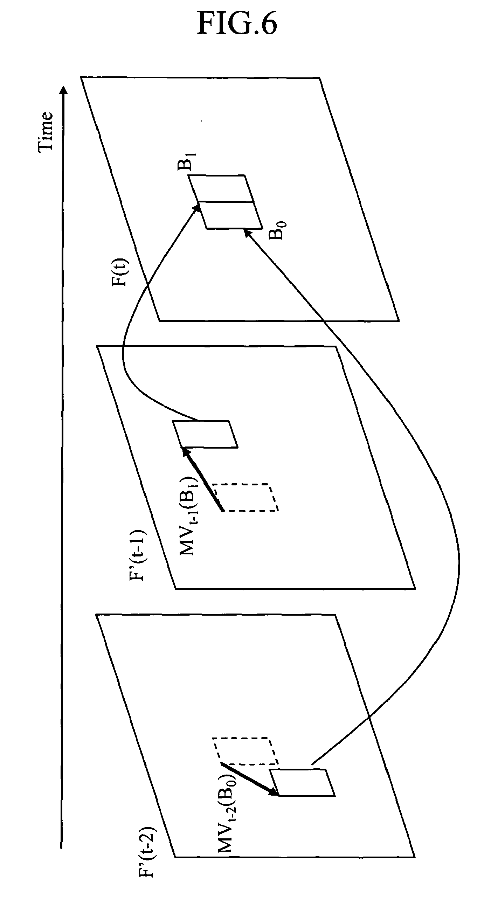

Therefore, the predicting unit 4 calculates the cost $J_k$ for each motion prediction mode first (step ST1). With reference to Fig. 6, a method of calculating the cost J will be explained by taking the case of mc_mode5 as an example. At this time, the motion prediction unit block which is a target to be predicted in the frame F(t) consists of two divided regions $B_0$ and $B_1$. Furthermore, it is assumed that two reference images F'(t-1) and F'(t-2) which have been already encoded and local-decoded are stored in the memory 16, and the predicting unit can carry out a motion prediction using the two reference images F'(t-1) and F'(t-2) for the divided regions $B_0$ and $B_1$. In the example of Fig. 6, the predicting unit detects a motion vector $MV_{t-2}(B_0)$ using the reference image F'(t-2) for the divided region $B_0$, and also detects a motion vector $MV_{t-1}(B_1)$ using the reference image F' (t-1) for the divided region $B_1$. When each divided region is expressed as B, the pixel value at the position x=(i, j) in the screen of the n-th frame is expressed as $S_n(x)$, and the motion vector is expressed as v, the amount D of prediction error of the divided region B can be calculated using the sum of absolute differences (SAD) according to an equation (2) shown below.

$$D = \sum_{x \in B} | S_n(\mathbf{x}) - S_{n-1}(\mathbf{x} + \mathbf{v})| \qquad (2)$$

From the amounts $D_0$ and $D_1$ of prediction error corresponding to the divided regions $B_0$ and $B_1$, each of which is derived as the result of the calculation using the above-mentioned equation (2), the amount D of prediction error is determined as $D=D_0+D_1$.

On the other hand, as to a total code amount R, the predicting unit uses estimated vectors PMV ($B_0$) and PMV ($B_1$) to derive motion vector prediction differences $MVD(B_0)$ and $MVD(B_1)$ according to an equation (3) shown below, and then carries out code amount conversion of these values to derive code amounts $R_0$ and $R_1$ and determine the total code amount $R=R_0+R_1$.

$$\mathrm{MVD}\,(\mathrm{B_0}) = \mathrm{MV_{t-2}}\,(\mathrm{B_0}) - \mathrm{PMV}\,(\mathrm{B_0}) \qquad (3)$$

$$\mathrm{MVD}\,(\mathrm{B_1}) = \mathrm{MV_{t-1}}\,(\mathrm{B_1}) - \mathrm{PMV}\,(\mathrm{B_1})$$

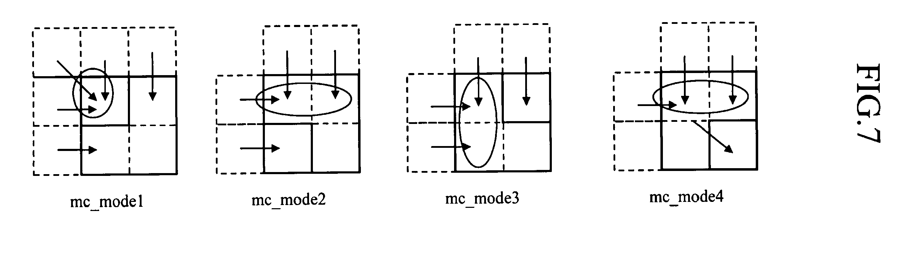

As a result, the cost J is determined. The predicting unit 4 calculates the cost J of each of all the motion vectors which are targets to be examined in the search range, and determines the solution which provides the smallest cost J as the division pattern of mc_mode5. An example of the determination of the estimated vectors PMV in mc_mode1 to mc_mode4 is shown in Fig. 7. In Fig. 7, each arrow means a motion vector MV in a surrounding or adjacent region which is used for the derivation of the estimated vector, and a median of three motion vectors MV enclosed by o is defined as the estimated vector PMV of the divided region indicated by the median.

When k=7, i.e., mc_mode7, is selected for each $L_i \times M_i$ pixel block, each of the modes of mc_mode0 to mc_mode7 is selected for each of the $l_i \times m_i$ pixel blocks. The modes at this time are named as sub_mc_mode0 to sub_mc_mode7, respectively, for convenience' sake. A process of determining sub_mc_mode for each of the $l_i \times m_i$ pixel blocks is carried out according to the process flow of Fig. 5, and the cost $J_7$ in mc_mode7 in the corresponding $L_i \times M_i$ pixel block is the sum total of costs derived using sub_mc_mode determined for each of the $l_i \times m_i$ pixel blocks.

Next, the predicting unit 4 verifies whether or not the cost $J_k$ in mc_mode$_k$ which the predicting unit has determined in this way is smaller than the cost in mc_mode$_k$ which it has verified until now (step ST2), and, when the cost $J_k$ inmc_modek is smaller than the cost in mc_mode$_k$ which it has verified until now (if "Yes" in step ST2), holds mc_mode$_k$ as the motion prediction mode which is assumed to be optimal until that time, and also holds the motion vector and the prediction error signal determined at that time (step ST3). After finishing verifying all the motion prediction modes (if "Yes" in step ST4), the predicting unit 4 outputs the motion prediction mode, the motion vector, and the prediction error signal 5 which the predicting unit has been holding until now as a final solution (step ST5). Otherwise (if "No" in step ST2 or if "No" in step ST4), the predicting unit, in step ST6, increments the variable k, and then returns to step ST1 and verifies the next motion prediction mode.

Through the above-mentioned process by the predicting unit 4, the prediction error signal 5 and the parameters 17 (the motion prediction mode and the motion vector) for prediction signal creation are outputted, and these are entropy-encoded by the variable length encoding unit 8.

Hereafter, the operation of the compressing unit 6 and the operation of the local decoding unit 10 related to the operation of the compressing unit, which are a feature of this Embodiment 1, will be explained in detail. The compressing unit 6 and the local decoding unit 10 in accordance with this Embodiment 1 have the following features.

(1) Switching between transformation and inverse transformation processes according to the shape of each motion vector allocation region
(2) Application of a resolution variable transformation and inverse transformation process

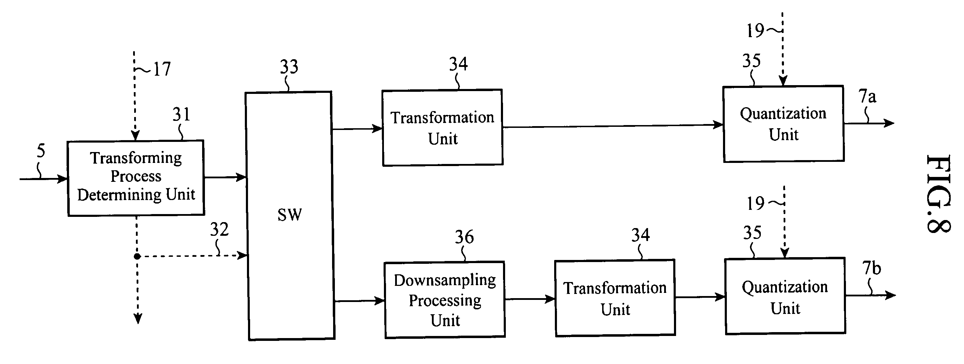

Fig. 8 is a block diagram showing the internal structure of the compressing unit 6 in accordance with this Embodiment 1. After receiving the prediction error signal 5, and then performing a transforming process of removing a correlation between pixels on the prediction error signal, the compressing unit 6 quantizes the prediction error signal and outputs quantization coefficient data 7a or 7b (corresponding to the prediction error compressed data 7) which is to be multiplexed into the bit stream 9.

In order to implement the above-mentioned features (1) and (2), a transforming process determining unit 31 selects a transforming process method first. The transforming process determining unit carries out this process with reference to the motion prediction mode included in the parameters 17 for prediction signal creation.

More specifically, when the motion prediction mode is mc_mode0, mc_mode5, or mc_mode6, the transforming process determining unit 31 sets each $(m/2)\times(l/2)$ pixel block as the unit which is the target for the transforming process, and selects, from among the following two choices (a) and (b), a means which provides a higher degree of encoding efficiency (i.e. a means which provides a smaller coding distortion when they have substantially the same code amount, or which provides a smaller code amount when they have substantially the same coding distortion) for each motion vector allocation region. The transforming process determining unit can implement this selection by evaluating the results of having actually tried the following two choices, for example.

Method (a) of dividing each motion vector allocation region into equal $(m/2)\times(l/2)$ pixel blocks, and performing transformation and quantization on each of the pixels blocks.

Method (b) of dividing each motion vector allocation region into equal mxl pixel blocks and downsampling each of the pixel blocks horizontally and vertically to create $(m/2)\times(l/2)$ pixel blocks, and performing transformation and quantization on each of these blocks.

The transforming process determining unit 31 outputs the result of the selection to a switch (a switch for transformation selection, SW) 33 as transforming process mode information 32. The switch 33 switches between the transforming process methods for each motion vector allocation region according to the transforming process mode information 32. When the transforming process mode information 32 indicates a selection of the above-mentioned choice (a), the prediction error signal 5 of each motion vector allocation region is inputted directly to a transformation unit 34 and is transformed in units of an $(m/2)\times(l/2)$ pixel block, and the results are quantized by a quantization unit 35 and are outputted as the quantization coefficient data 7a. The transformation unit 34 and the quantization unit 35 which are shown in an upper portion of Fig. 8 are defined in combination as a second quantization and transformation unit.

In contrast, when the transforming process mode information 32 indicates a selection of the above-mentioned choice (b), the prediction error signal 5 of each motion vector allocation region is inputted to a downsampling processing unit 36 in units of an mxl block first, and each m×l block of the prediction error signal is reduced to $(m/2)\times(l/2)$ pixel blocks. The prediction error signal is transformed and quantized by a transformation unit 34 and a quantization unit 35 having the same structures as those used in the case of the choice (a), and is outputted as the quantization coefficient data 7b. The transformation unit 34 and the quantization unit 35 which are shown in a lower portion of Fig. 8 are defined in combination as a first quantization and transformation unit.

The downsampling processing unit 36 performs pixel thinning by applying a downsample filter which is designed adaptively to the properties of the prediction error signal 5. The downsample filter can be selected arbitrarily from a method of applying such a linear low pass filter as defined by the following equation (4) both in a horizontal direction and in a vertical direction, and a method of applying wavelet transform to extract only a low-pass component, and so on.

$$y_n = \sum_{k=-(N-1)/2}^{(N-1)/2} a_k x_{n+k} \qquad \text{(N: the number of filter taps)} \qquad (4)$$

A method of transmitting information showing which one of the quantization coefficient data 7a and 7b is selected as the quantization coefficient data of the prediction error compressed data 7 to the video decoding device is implemented by outputting the transforming process mode information 32 to the variable length encoding unit 8, and then multiplexing this information into the bit stream 9.

When the motion prediction mode is one of mc_mode1 to mc_mode4, the transforming process determining unit 31 performs a selection of the above-mentioned choice (a) or (b) only when the motion vector allocation region is a larger region which is not an mxl pixel block. Furthermore, when the motion prediction mode is mc_mode7, the transforming process determining unit always selects the choice (a). The choice (a) is effective when the motion prediction fails and the prediction error signal distribution in the motion vector allocation region is not uniform (large dispersion) while the choice (b) is effective when the motion prediction functions effectively and the prediction error signal distribution in the motion vector allocation region is uniform (small dispersion).

In order to improve the encoding efficiency in the case of the choice (b), nonpatent reference 1 proposes direct DCT to 16×16 pixel blocks, i.e. enlargement of the size of the target block for DCT processing as to each motion prediction block having a size larger than 16×16 pixels. However, a problem is that DCT of large block size increases the number of bits required for coefficient expression, and has an influence on the cost of the hardware used for the transforming process.

In a case in which the transforming process determining unit is constructed in such a way as to use sub_mc_mode, because each (m/2)×(l/2) pixel block corresponds to a minimum motion vector allocation region size in the case of sub_mc_mode7, the above-mentioned structure maintains the effect of DCT of large block size while the transformation and quantization process can be always limited only to (m/2)×(l/2) pixels, so that the encoding can be carried out with the number of coefficients to be encoded and the number of bits required for coefficient expression being reduced.

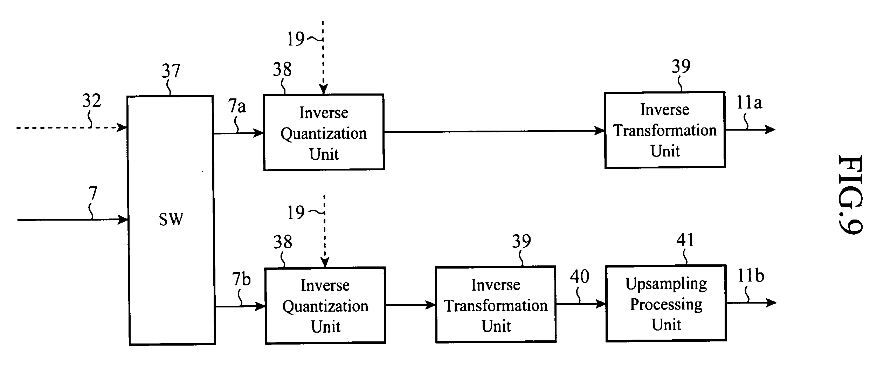

Fig. 9 shows the internal structure of the local decoding unit 10 in accordance with this Embodiment 1. The local decoding unit 10 receives the quantization coefficient data 7 and the transforming process mode information 32, switches between processes according to determination by a switch (switch for transformation selection, SW) 37 for determining whether the quantization coefficient data of the prediction error compressed data 7 has been encoded through either the process based on the above-mentioned choice (a) or the process based on the above-mentioned choice (b), which is performed by the compressing unit 6, according to the specification by the transforming process mode information 32, and performs inverse quantization and inverse transformation using a method suitable for the selected process to reconstruct a decoded prediction error signal 11a or 11b.

When the transforming process mode information 32 indicates the choice (a), the local decoding unit determines that the quantization coefficient data of the prediction error compressed data 7 is the quantization coefficient data 7a shown in Fig. 8, and performs inverse quantization and inverse transformation on each (m/2)×(l/2) pixel block of the quantization coefficient data by using an inverse quantization unit 38 and an inverse transforming unit 39 to derive a decoded prediction error signal 11a. The inverse quantization unit 38 and the inverse transformation unit 39 which are shown in an upper portion of Fig. 9 are defined in combination as a second inverse quantization and transformation unit. In contrast, when the transforming process mode information 32 indicates the choice (b), the local decoding unit determines that the quantization coefficient data of the prediction error compressed data 7 is the quantization coefficient data 7b shown in Fig. 8, and performs inverse quantization and inverse transformation on the quantization coefficient data first by using an inverse quantization unit 38 and an inverse transforming unit 39 having the same structures as those used in the case of the choice (a) to derive decoded predicted pixel values 40 in units of an (m/2)×(l/2) pixel block. An upsampling processing unit 41 then performs a linear interpolation filtering process on the decoded predicted pixel values 40 of (m/2)×(l/2) pixel blocks to create a decoded prediction error signal 11b which consists of mxl pixel blocks. The inverse quantization unit 38 and the inverse transformation unit 39 which are shown in a lower portion of Fig. 9 are defined in combination as a first inverse quantization and transformation unit.

2. Structure of the encoded bit stream

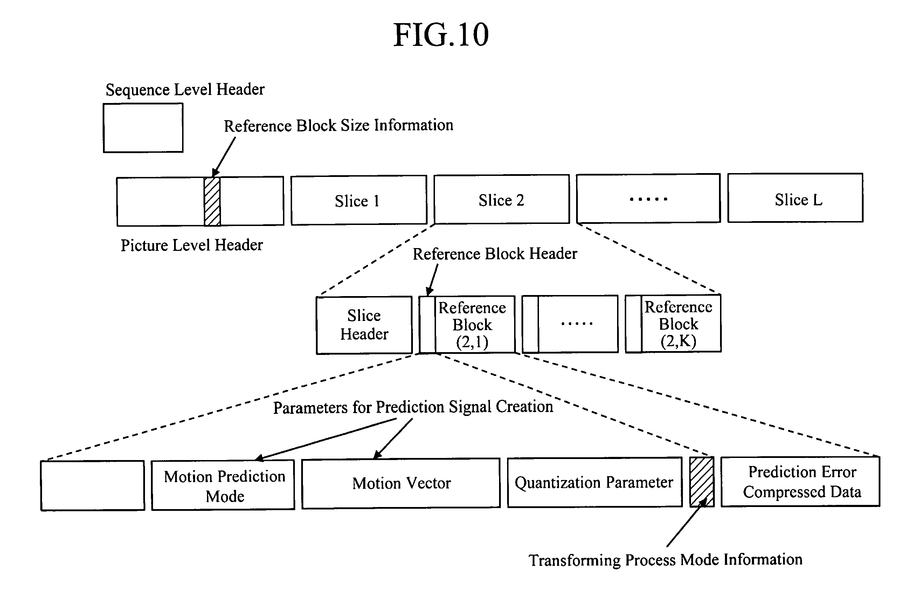

The inputted video signal 1 is encoded by the video encoding device of Fig. 2 according to the above-mentioned processes, and the encoded video signal is outputted from the video encoding device as the bit stream 9 in units each of which is a bundle consisting of a plurality of reference blocks (each unit is referred to as a slice from here on). The data arrangement of the bit stream 9 is shown in Fig. 10. The bit stream 9 is constructed as the one in which a number of encoded data whose number is equal to the number of reference blocks included in each frame are collected in each frame, and the reference blocks are unitized in each slice. A picture level header to which the reference blocks belonging to the same frame refer as a common parameter is prepared, and the reference block size information 18 is stored in this picture level header. If the reference block size $M_{max}$ is fixed per sequence at a higher level than the picture level, the reference block size information 18 can be formed to be multiplexed into the sequence level header.

Each slice begins from its slice header, and the encoded data of each reference block in the slice are arranged continuously after the slice header. The example of Fig. 10 shows that the K reference blocks are included in the second slice. Each reference block data is comprised of a reference block header and prediction error compressed data. In the reference block header, the motion prediction modes mc_mode and the motion vectors of the motion prediction unit blocks in the corresponding reference block (they correspond to the parameters 17 for prediction signal creation), the quantization parameters 19 used for creation of the prediction error compressed data 7, etc. are arranged. Motion prediction mode type information indicating one of mc_mode0 to mc_mode7 is encoded, and, when the motion prediction mode type information shows one of mc_mode0 to mc_mode6, the pieces of motion vector information of the motion vector allocation regions specified by the motion prediction mode are encoded. When the mode prediction mode type information shows mc_mode7, sub_mc_mode is encoded for each basic block.

Next, the quantization parameters 19 for each reference block are multiplexed, and the prediction error compressed data 7 (corresponding to the quantization coefficient data 7a or 7b) outputted from the compressing unit 6 are multiplexed. At this time, when the motion prediction mode is mc_mode0, mc_mode5, or mc_mode6, the transforming process mode information 32 is multiplexed, as information showing whether the encoding of the prediction error compressed data 7 (quantization coefficient data 7a or 7b) is processed through either the choice (a) or the choice (b) in the above-mentioned compressing unit 6 and local decoding unit 10, before the prediction error compressed data.

Although not illustrated, the reference block size determining unit can be constructed in such a way as to select the sizes $L_i$ and $M_i$ of each motion prediction unit block which are used within each reference block for each reference block, and multiplex the sizes $L_i$ and $M_i$ of the motion prediction unit block which are used within each reference block into each reference block header, instead of multiplexing the sizes $L_i$ and $M_i$ into the sequence or the picture level header. As a result, although the video encoding device needs to encode the sizes $L_i$ and $M_i$ of each motion prediction unit block for each reference block, the video encoding device can change the sizes of each motion prediction unit block according to the properties of the local image signal, and becomes able to perform the motion prediction with a higher degree of adaptability. Information indicating whether to either multiplex the sizes $L_i$ and $M_i$ of each motion prediction unit block into either each reference block header or fixedly multiplex them into a header at an upper level, such as a sequence, a GOP, a picture, or a slice can be multiplexed, as identification information, into the header at an upper level, such as a sequence, a GOP, a picture, or a slice. As a result, when the influence exerted upon the motion prediction ability is small even if the sizes of each motion prediction unit block are fixedly multiplexed into an upper level header, the video encoding device can reduce the overhead required for encoding the sizes $L_i$ and $M_i$ of each motion prediction unit block for each reference block, and hence perform the encoding with efficiency.

3. Video decoding device

Fig. 11 is a block diagram showing the structure of the video decoding device in accordance with this Embodiment 1. After receiving the bit stream 9 shown in Fig. 10 and then decoding the sequence level header, a variable length decoding unit (decoding unit) 100 decodes the picture level header and also decodes the information showing the reference block size. As a result, the variable length decoding unit recognizes the size $M_{max}$ of each reference block and the sizes $L_i$ and $M_i$ of each motion prediction unit block which are used for the picture, and notifies this reference block size information 18 to a prediction error decoding unit 101 and a predicting unit 102. The variable length decoding unit 100 is constructed in such a way as to, when the bit stream has a structure in which the sizes $L_i$ and $M_i$ of each motion prediction unit block can be multiplexed into each reference block header, decode the identification information showing whether or not the sizes $L_i$ and $M_i$ of each motion prediction unit block are multiplexed into each reference block header, and recognize the sizes $L_i$ and $M_i$ of each motion prediction unit block by decoding each reference block header according to the identification information.

The variable length decoding unit 100 starts decoding each reference block data from decoding of the reference block header first. Next, the variable length decoding unit decodes the motion prediction mode which is applied to each motion prediction unit block. When decoding the motion prediction mode, the variable length decoding unit decodes mc_mode for each motion prediction unit block first. When mc_mode shows mc_mode7, the variable length decoding unit decodes sub_mc_mode for each basic block, whereas when mc_mode shows another mode, the variable length decoding unit decodes the motion vector in each of the number of motion vector allocation regions, and further decodes the pieces of information about the quantization parameters 19, the transforming process mode information 32, the prediction error compressed data 7, etc. in turn for each reference block.

The prediction error compressed data 7, the quantization parameters 19, and the transforming process mode information 32 are inputted to the prediction error decoding unit 101, and are decompressed to a decoded prediction error signal 11. This prediction error decoding unit 101 carries out a process equivalent to that carried out by the local decoding unit 10 in the video encoding device shown in Fig. 2 according to the decoded transforming process mode information 32. More specifically, the prediction error decoding unit 101 is provided with the switch 37, the inverse quantization units 38, the inverse transformation units 39, and the upsampling processing unit 41 which are shown in Fig. 9, selects whether or not to bypass the upsampling processing unit 41 according to the transforming process mode information 32 by using the switch 37, and performs inverse quantization and inverse transformation.

The predicting unit 102 creates a prediction signal 12 from both the parameters 17 for prediction signal creation decoded by the variable length decoding unit 100, and a reference image signal 15 stored in a memory 103. Although the predicting unit 102 carries out a process equivalent to that carried out by the predicting unit 4 in the video encoding device, this process does not include any motion vector detecting operation. The motion prediction mode is either of mc_mode0 to mc_mode7 shown in Fig. 4, and the predicting unit 102 creates a decoded signal (decoded image) 13 by using the motion vector allocated to each basic block according to the divided shapes. The decoded prediction error signal 11 and the prediction signal 12 are added by an adder unit, and are inputted to a loop filter 104 as a decoded signal 13. This decoded signal 13 is stored in the memory 103 as the reference image signal 15 for creating a subsequent prediction signal 12 after the decoded signal is subjected to a process of removing encoding noise in the loop filter 104.

As mentioned above, the video encoding device in accordance with Embodiment 1 is constructed in such a way as to include: the block dividing unit 2 for dividing each frame of a video signal 1 inputted thereto into macro blocks each having a predetermined size, and outputting each macro block as an encoded signal 3; the memory 16 for storing a reference image signal 15; the predicting unit 4 for performing an inter frame prediction on the basis of both the reference image signal 15 stored in the memory 16 and the encoded signal 3 to create a prediction signal 12, and for outputting information specifying a method used for the above-mentioned inter frame prediction as a parameter 17 for prediction signal creation, and subtracting the prediction signal 12 from the encoded signal 3 to create a prediction error signal 5; the downsampling processing unit 36 for downsampling the prediction error signal 5 to create a downscaled prediction error signal; the transformation unit 34 for transforming the downscaled prediction error signal; the quantization unit 35 for quantizing the downscaled prediction error signal; the inverse quantization unit 38 for inverse-quantizing quantization coefficient data 7b outputted by the quantization unit 35; the inverse transformation unit 39 for inverse-transforming the quantization coefficient data 7b; the upsampling processing unit 41 for upsampling decoded predicted pixel values 40 outputted by the inverse transformation unit 39 to create a decoded prediction error signal 11b; the adder unit for adding the decoded prediction error signal 11b and the prediction signal 12 to create a decoded signal 13, and for outputting this decoded signal 13 to the memory 16 as the reference image; and the variable length encoding unit 8 for entropy-encoding the quantization coefficient data 7b and the parameter 17 for prediction signal creation to output a bit stream 9. The video encoding device is constructed in such a way as to further include: the transforming process determining unit 31 for selecting whether to use either the downsampling processing unit 36, the transformation unit 34, the quantization unit 35, the inverse quantization unit 38, the inverse transformation unit 39, and the upsampling processing unit 41, or the transformation unit 34, the quantization unit 35, the inverse quantization unit 38, and the inverse transformation unit 39; and the switches 33 and 37.

Therefore, when performing video compression on each frame of a video signal, the video encoding device carries out the transformation, the quantization, the inverse quantization, and the inverse transformation, and carries out definition conversion to enlarge the frame after carrying out definition conversion of the prediction error signal in units of a block to reduce the frame. As a result, the encoding efficiency can be improved and the circuit scale can be reduced. Therefore, in order to encode a color video image signal having the 4:4:4 format efficiently, even when the size of each motion vector allocation region for motion-compensated prediction is large, the video encoding device can encode a prediction error signal 5, which is created as a result of the motion prediction, with efficiency and with the implementation load being reduced according to the distribution state of the signal, and can maintain the encoding quality even at a high compression ratio. This video encoding device can be provided at a low cost.

Furthermore, the video decoding device in accordance with Embodiment 1 is constructed in such a way as to include: the variable length decoding section 100 for entropy-decoding a bit stream 9 inputted thereto, and for outputting a parameter 17 for prediction signal creation and quantization coefficient data which are included in the above-mentioned bit stream 9; the memory 103 for storing a reference image signal 15; the inverse quantization unit 38 for inverse-quantizing the quantization coefficient data; the inverse transformation unit 39 for inverse-transforming the quantization coefficient data; the upsampling processing unit 41 for upsampling decoded predicted pixel values 40 outputted by the inverse transformation unit 39 to create a decoded prediction error signal 11b; the predicting unit 102 for creating a prediction signal 12 from the reference image signal 15 stored in the memory 103 according to the parameter 17 for prediction signal creation; and the adder unit for adding the decoded prediction error signal 11b and the prediction signal 12 to create a decoded signal 13, and for outputting this decoded signal 13 to the memory 103 as the reference image signal 15. The video decoding device is constructed in such a way as to further include the switch 37 for selecting whether to use either the inverse quantization unit 38, the inverse transformation unit 39, and the upsampling processing unit 41, or the inverse quantization unit 38 and the inverse transformation unit 39 according to decoded transforming process mode information 32. Therefore, the video decoding device which corresponded to the above-mentioned video encoding device can be provided.

Although in this Embodiment 1 the example in which a 4:4: 4 video signal is encoded and decoded is explained, it is needless to say that the encoding and decoding processes in accordance with the present invention can be applied to a case in which encoding and decoding are carried out in units of a reference block, such as a macro block, in video encoding aimed at encoding a video having a 4: 2: 0 or 4: 2: 2 format in which a color thinning operation is performed in a conventional luminance color difference component format, as previously mentioned.

Industrial Applicability

The video encoding device, the video decoding device, the video encoding method, and the video decoding method in accordance with the present invention can implement a video encoding method having good implementation load balance, of removing a signal correlation more effectively according to the statistical and local properties of a video signal which is a target to be encoded and performing efficient information compression, they are suitable for use in encoding and so on of an ultra-high-definition video signal having the 4:4:4 format.

**Claims**

1. A video encoding device comprising:

a block dividing unit for dividing each frame of video signal inputted thereto into macro blocks each having a predetermined size to output each of said macro blocks as a macro block image;

a frame memory for storing reference frames;

an inter frame prediction unit for performing inter frame prediction on a basis of both the reference frame stored in said frame memory and said macro block image to create a prediction image, and for outputting information specifying a method used for said inter frame prediction as inter frame prediction information;

a predicting unit for subtracting said prediction image from said macro block image to create a prediction error signal;

a downsampling processing unit for downsampling said prediction error signal to create a downsceled prediction error signal;

a first quantization and transformation unit for transforming and quantizing said downscaled prediction error signal to create quantized and transformed coefficients;

a first inverse quantization and transformation unit for inverse-quantizing and inverse-transforming said quantized and transformed coefficients to create a decoded downscaled prediction error signal;

an upsampling processing unit for upsampling said decoded downscaled prediction error signal to create a decoded prediction error signal;

an adder unit for adding said decoded prediction error signal and said prediction image to create a local decoded image, and outputting said local decoded image to said frame memory as the reference frame; and

an entropy encoding unit for entropy-encoding said quantized and transformed coefficients and said inter frame prediction information to output encoded data.

2. The video encoding device according to claim 1, wherein said video encoding device includes a second quantization and transformation unit for bypassing the downsampling processing unit and directly transforming and quantizing the prediction error signal to create the quantized and transformed coefficients, a second inverse quantization and transformation unit for bypassing the upsampling processing unit and inverse-quantizing and inverse-transforming said quantized and transformed coefficients to create the decoded prediction error signal, and a switch for transformation selection for selecting whether to use either said downsampling processing unit, the first quantization and transformation unit, the first inverse quantization and transformation unit, and said upsampling processing unit, or said second quantization and transformation unit and said second inverse quantization and transformation unit, and wherein the entropy encoding unit entropy-encodes transforming process mode information showing a result of the selection by said switch for transformation selection as well.

3. A video decoding device comprising:

an entropy decoding unit for entropy-decoding encoded data inputted thereto, and for outputting inter frame prediction information and quantized and transformed coefficients which are included in said encoded data;

a frame memory for storing a reference frame;

a first inverse quantization and transformation unit for inverse-quantizing and inverse-transforming said quantized and transformed coefficients to create a decoded downscaled prediction error signal;

an upsampling processing unit for upsampling said decoded downscaled prediction error signal to create a decoded prediction error signal; a predicting unit for creating a prediction image from the reference frame stored in said frame memory according to said inter frame prediction information; and

an adder unit for adding said decoded prediction error signal and said prediction image to create a decoded image, and for outputting said decoded image to said frame memory as the reference frame.

4. The video decoding device according to claim 3, wherein said video decoding device includes a second inverse quantization and transformation unit for bypassing the upsampling processing unit and inverse-quantizing and inverse-transforming the quantized and transformed coefficients to create the decoded prediction error signal, and a switch for transformation selection for selecting whether to use either the first inverse quantization and transformation unit and said upsampling processing unit or said second inverse quantization and transformation unit, and wherein the entropy decoding unit entropy-decodes transforming process mode information showing the selection by said switch for transformation selection, which is included in the encoded data, as well, and said switch for transformation selection is switched according to said transforming process mode information.

**5.** A video encoding method comprising:

a block division step of dividing each frame of a moving image signal inputted thereto into macro blocks each having a predetermined size to output each of said macro blocks as a macro block image;

an inter frame prediction step of performing an inter frame prediction on a basis of both a reference frame stored in a frame memory and said macro block image to create a prediction image, and for outputting information specifying a method used for said inter frame prediction as inter frame prediction information;

a predicting step of subtracting said prediction image from said macro block image to create a prediction error signal;

a downsampling process step of downsampling said prediction error signal to create a downscaled prediction error signal;

a first quantization and transformation step of transforming and quantizing said downscaled prediction error signal to create quantized and transformed coefficients;

a first inverse quantization and transformation step of inverse-quantizing and inverse-transforming said quantized and transformed coefficients to create a decoded downscaled prediction error signal;

an upsampling process step of upsampling said decoded downscaled prediction error signal to create a decoded prediction error signal;

an adding step of adding said decoded prediction error signal and said prediction image to create a local decoded image, and outputting said local decoded image to said frame memory as the reference frame; and

an entropy encoding step of entropy-encoding said quantized and transformed coefficients and said inter frame prediction information to output encoded data.

**6.** The video encoding method according to claim 5, wherein the video encoding method includes a transformation selection step of selecting whether or not to bypass the downsampling process step and the upsampling process step, a second quantization and transformation step of directly transforming and quantizing the prediction error signal to create the quantized and transformed coefficient when it is selected in said transformation selection step that said downsampling process step is bypassed, and a second inverse quantization and transformation step of inverse-quantizing and inverse-transforming said quantized and transformed coefficients to create the decoded prediction error signal when it is selected in said transformation selection step that said upsampling process step is bypassed, and wherein when it is selected in said transformation selection step that said downsampling process step and said upsampling process step are not bypassed, said downsampling process step, the first quantization and transformation step, the first inverse quantization and transformation step, and said upsampling process step are performed, whereas when it is selected in said transformation selection step that said downsampling process step and said upsampling process step are bypassed, said second quantization and transformation step and said second inverse quantization and transformation step are performed, and transforming process mode information showing a result of the selection in said transformation selection step is entropy-encoded as well in the entropy encoding step.

**7.** A video decoding device comprising:

an entropy decoding step of entropy-decoding encoded data inputted thereto, and outputting inter frame prediction information and quantized and transformed coefficients which are included in said encoded data;

a first inverse quantization and transformation step of inverse-quantizing and inverse-transforming said quantized and transformed coefficients to create a decoded downscaled prediction error signal;

an upsampling processing step of upsampling said decoded downscaled prediction error signal to create a decoded prediction error signal;

a predicting unit of creating a prediction image from a reference frame stored in a frame memory according to said inter frame prediction information; and

an adding step of adding said decoded prediction error signal and said prediction image to create a decoded image, and outputting said decoded image to said frame memory as the reference frame.

**8.** The video decoding method according to claim 7, wherein said video decoding method includes a transformation selection step of selecting whether or not to bypass the upsampling process step, and a second inverse quantization and transformation step of inverse-quantizing and inverse-transforming the quantized and transformed coefficients to create the decoded prediction error signal when it is selected in said transformation selection step that said upsampling process step is bypassed, and wherein transforming process mode information which is included in the encoded data and which shows the selection in said transformation selection step is entropy-decoded as well in the entropy decoding step, and, when it is selected in said transformation selection step according to said transforming process mode information that said upsampling process step is not bypassed, the first inverse quantization and transformation step and said upsampling process step are performed, whereas when it is selected in said transformation selection step according to said transforming process mode information that said upsampling process step is bypassed, said second inverse quantization and transformation step is performed.

9. The video encoding device according to claim 2, wherein the switch for transformation selection makes a comparison between a result of having tried an encoding unit which does not bypass the first quantization and transformation unit, and a result of having tried an encoding unit which does not bypass the second quantization and transformation unit to select one of the encoding units which provides a higher degree of encoding efficiency.

10. The video encoding method according to claim 6, wherein in the transformation selection step, a comparison between a result of having tried an encoding method of not bypassing the first quantization and transformation step, and a result of having tried an encoding method of not bypassing the second quantization and transformation step to select one of the encoding methods which provides a higher degree of encoding efficiency.

(a)

4:4:4 Format
Pixel

H    C0    W

H    C1    W

H    C2    W

(C0,C1,C2) = (R,G,B), (Y,Cb,Cr), (X,Y,Z) etc

(b)

4:2:0 Format
Pixel

H    Y    W

H/2    Cb

H/2    Cr    W/2

FIG.1

EP 2 437 499 A1

# FIG.2

# FIG.3

# FIG.4

mc_mode0
mc_mode1
mc_mode2
mc_mode3
mc_mode4
mc_mode5
mc_mode6
mc_mode7

# FIG.5

```
                    ┌──────────┐
                    │  Start   │
                    └────┬─────┘
                         │
                         ▼
              ┌─────────────────────┐
              │  Calculate Cost Jₖ  │───ST1
              └──────────┬──────────┘
                         │
                      ST2│
                         ▼
              ◇───────────────────◇      NO    ┌──────────┐  ST6
              │   Is Jₖ Minimum?  │──────────▶│   k++    │
              ◇───────────────────◇           └──────────┘
                         │ YES
                         ▼
              ┌─────────────────────┐
              │  Hold Motion Vector │
              │  and Prediction     │───ST3
              │  Error Signal of    │
              │  mc_modeₖ           │
              └──────────┬──────────┘
                         │
                      ST4│
                         ▼
              ◇───────────────────◇   NO
              │  Have All Motion  │──────────┘
              │  Prediction Modes │
              │  Been Verified?   │
              ◇───────────────────◇
                         │ YES
                         ▼
              ┌─────────────────────┐
              │  Output Motion      │
              │  Prediction Mode,   │───ST5
              │  Motion Vector, and │
              │  Prediction Error   │
              │  Signal Being Held  │
              └──────────┬──────────┘
                         │
                         ▼
                    ┌──────────┐
                    │   End    │
                    └──────────┘
```

Calculate Cost $J_k$ ~ST1

Is $J_k$ Minimum? ST2

Hold Motion Vector and Prediction Error Signal of $mc\_mode_k$ ~ST3

Have All Motion Prediction Modes Been Verified? ST4

Output Motion Prediction Mode, Motion Vector, and Prediction Error Signal Being Held ~ST5

k++ ST6

# FIG.6

# FIG.7

mc_mode4

mc_mode3

mc_mode2

mc_mode1

FIG.8

Transforming
Process
Determining Unit
31

~17

5

SW
33

32

Transformation
Unit
34

19~

Quantization
Unit
35

7a

Downsampling
Processing
Unit
36

Transformation
Unit
34

19~

Quantization
Unit
35

7b

# FIG.9

# FIG.10

Sequence Level Header

Reference Block Size Information

| Slice 1 | Slice 2 | ····· | Slice L |

Picture Level Header

Reference Block Header

| Slice Header | Reference Block (2,1) | ····· | Reference Block (2,K) |

Parameters for Prediction Signal Creation

| | Motion Prediction Mode | Motion Vector | Quantization Parameter | | Prediction Error Compressed Data |

Transforming Process Mode Information

# FIG.11

# FIG.12

# FIG.13

| | | International application No. |
|---|---|---|
| **INTERNATIONAL SEARCH REPORT** | | PCT/JP2010/003552 |

A. CLASSIFICATION OF SUBJECT MATTER
*H04N7/32*(2006.01)i, *H04N7/30*(2006.01)i

According to International Patent Classification (IPC) or to both national classification and IPC

B. FIELDS SEARCHED

Minimum documentation searched (classification system followed by classification symbols)
H04N7/32, H04N7/30

Documentation searched other than minimum documentation to the extent that such documents are included in the fields searched
Jitsuyo Shinan Koho          1922-1996   Jitsuyo Shinan Toroku Koho   1996-2010
Kokai Jitsuyo Shinan Koho   1971-2010   Toroku Jitsuyo Shinan Koho   1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2007-528675 A   (Thomson Research Funding Corp.), <br> 11 October 2007 (11.10.2007), <br> paragraphs [0003] to [0006], [0021], [0033]; <br> fig. 6 <br> & US 2007/0189392 A1     & EP 1730695 A <br> & WO 2005/093661 A2     & KR 10-2006-0134976 A <br> & CN 1973546 A          & BRA PI0508506 <br> & ZA 200607434 A | 1-10 |
| A | WO 1999/022525 A1   (Mitsubishi Electric Corp.), <br> 06 May 1999 (06.05.1999), <br> page 4, lines 2 to 8 <br> & US 6493385 B1 | 9-10 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 July, 2010 (30.07.10) | 10 August, 2010 (10.08.10) |

| Name and mailing address of the ISA/ <br> Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2010/003552

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | JP 10-191351 A  (Fujitsu Ltd.),<br>21 July 1998 (21.07.1998),<br>paragraphs [0046], [0060] to [0065]; fig. 3<br>& US 6104434 A          & US 6333949 B1<br>& EP 838955 A3          & EP 1455536 A1<br>& EP 1646245 A1          & EP 1648176 A1<br>& EP 1699245 A2          & EP 1725048 A2<br>& EP 1901562 A1          & EP 838955 A2<br>& DE 69735028 D          & DE 69735743 D<br>& DE 69735028 T          & DE 69735743 T<br>& DE 69738262 D          & DE 69738264 D<br>& DE 69738494 D          & DE 69738264 T<br>& DE 69738262 T          & DE 69738494 T<br>& DE 69739575 D          & DE 69739577 D | 1-8<br>9-10 |
| X<br>A | JP 2002-118849 A  (NEC Corp.),<br>19 April 2002 (19.04.2002),<br>fig. 1<br>(Family: none) | 1,3,5,7<br>2,4,6,8-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **Siwei Ma ; C.-C. Jay Kuo.** High-definition Video Coding with Super-macroblocks. *Proc. SPIE,* 2007, vol. 6508, 650816

- **S.Kondo ; H.Sasai.** A Motion Compensation Technique using Sliced Blocks and its Application to Hybrid Video Coding. *VCIP 2005,* July 2005